# EUROPÄISCHE PATENTSCHRIFT

(11) **EP 1 664 614 B1**
(45) Veröffentlichungstag und Bekanntmachung des Hinweises auf die Patenterteilung: **11.07.2012**
(21) Anmeldenummer: 04761900.2
(22) Anmeldetag: 07.09.2004
(51) Int. Cl.: F16L 55/164

(54) **VERFAHREN ZUM ABDICHTEN EINER AUS MEHREREN TEILSTÜCKEN ZUSAM MENGESETZTEN ROHRLEITUNG, INSBESONDERE EINER GAS-ROHRLEITUNG**
METHOD FOR SEALING A PIPE CONDUIT, ESPECIALLY ASSEMBLED FROM A PLURALITY OF SECTIONS, ESPECIALLY A GAS PIPE CONDUIT
PROCEDE POUR ASSURER L'ETANCHEITE D'UNE CONDUITE CONSTITUEE DE PLUSIEURS PARTIES, EN PARTICULIER UNE CONDUITE DE GAZ

(30) Priorität: 11.09.2003 EP 03405667
(43) Veröffentlichungstag der Anmeldung: 07.06.2006
(73) Patentinhaber: Kämmlein GmbH, 6340 Baar (CH)
(72) Erfinder: Balmer, Michael, 8723 Rufi (CH)
(74) Vertreter: Wüstefeld, Regine Marie
(86) Internationale Anmeldenummer: PCT/CH2004/000560
(87) Internationale Veröffentlichungsnummer: WO 2005/024286

(56) Entgegenhaltungen:
- DE-A- 10 044 550
- US-A- 4 554 178
- US-A- 4 593 722
- US-A- 4 768 561
- US-A- 5 230 842
- US-A- 5 980 984

## Beschreibung

Die Erfindung bezieht sich auf ein Verfahren zum Abdichten einer aus mehreren Teilstücken zusammengesetzten Rohrleitung, insbesondere einer Gas-Rohrleitung, nach dem Oberbegriff des Patentanspruchs 1.

Gas-Rohrleitungen, insbesondere solche in Gebäuden, weisen üblicherweise Schraub- oder Gewindeverbindungen auf, die gasdicht abgedichtet werden müssen. Seit vielen Jahren werden solche Abdichtungen mit Hilfe von Hanffasern durchgeführt. Aus Hanfmaterial bestehende Abdichtungen haben während vieler Jahre eine gute Abdichtwirkung. Im Laufe der Zeit trocknen sie allerdings infolge des durch die Rohrleitung strömenden Gases aus, was ein Schrumpfen des pflanzlichen Materials verursacht und zu Undichtigkeiten insbesondere dann führen kann, wenn bei ein und derselben Gas-Rohrleitung von Stadtgas auf Erdgas umgestellt wurde. Derartige Undichtigkeiten führen nicht nur zu Gasverlusten und damit zu einem erhöhten Gasverbrauch, sie können auch ein erhebliches Sicherheitsproblem darstellen.

Aus der US-A-4 554 178 ist ein Verfahren zum inneren Auskleiden einer Rohrleitung bekannt, bei welchem ein fluides Dichtmittel in Form einer Emulsion im Schaumzustand unter Verwendung eines Inertgases oder Luft in die Rohrleitung eingegeben wird, ein bestimmter Druck an die mit dem Schaum gefüllte Rohrleitung über einen bestimmten Zeitraum angelegt wird und ein Inertgas- oder Luftstrom in die mit dem Schaum gefüllte Rohrleitung eingeleitet wird, um eine überschüssige Menge an Dichtmittel aus der Rohrleitung zu entfernen, wobei das Dichtmittel eine zylindrische Form annimmt und an der inneren Wandoberfläche der Rohrleitung über dessen gesamte Länge anhaftet. Anschliessend wird die zylindrische Form des Dichtmittels ausgehärtet. Das Aushärten des Dichtmittels kann durch Einleiten von erwärmter Luft in die Rohrleitung beschleunigt werden. Die erwärmte Luft kann eine Temperatur zwischen 60 und 80°C aufweisen. Das überschüssige Dichtmittel wird beispielsweise mit Hilfe von in die Rohrleitung eingeleiteter Luft aus der Rohrleitung entfernt. Dazu ist ein Gebläse vorgesehen.

Somit ist aus der vorgenannten US-A-4 554 178 ein Verfahren zum Abdichten einer aus mehreren Teilstücken zusammengesetzten Rohrleitung, insbesondere einer Gas-Rohrleitung, mit folgenden Schritten bekannt:
- Auffüllen der Rohrleitung mit einem fluiden Dichtmittel mit Hilfe von Druckluft;
- Halten des Drucks in der Rohrleitung;
- Entfernen eines Teils des Dichtmittels aus der Rohrleitung mit Hilfe von Luft;
- Trocknen der Rohrleitung mit Hilfe trockener, erwärmter Luft.

Ein ähnliches Verfahren ist aus der US-A-5 980 984 bekannt. Bei diesem Verfahren sollen hingegen lediglich Undichtigkeiten der Rohrleitung abgedichtet werden, ohne dass eine gesamte Beschichtung der Innenwand der Rohrleitung durch das Dichtmittel erfolgt. Bei diesem Verfahren ist ebenfalls ein Gebläse vorgesehen, welches einen Trägerstrom erzeugt. Dieser wird durch einen Lufterhitzer erwärmt und dann durch einen Filter geleitet, um Verschmutzungen zu entfernen. Anschliessend wird das Dichtmittel über eine Injektionsdüse in die Rohrleitung eingespeist. Das Dichtmittel wird durch den mit Hilfe des Gebläses erzeugten Trägerstrom durch die Rohrleitung transportiert. Die Flüssigkeit verdampft aus dem Dichtmittel, und der Trägerstrom mit der verbleibenden festen Phase des Dichtmittels dient dazu, die abzudichtende Rohrleitung unter Druck zu setzen. Vor dem Einleiten des suspensionsartigen Dichtmittels kann die Luft entweder getrocknet oder erwärmt werden.

Der Erfindung liegt die Aufgabe zugrunde, ein Verfahren der eingangs erwähnten Art zu schaffen, welches wirtschaftlicher durchführbar ist.

Diese Aufgabe wird erfindungsgemäss durch ein Verfahren mit den Merkmalen des Patentanspruchs 1 gelöst. Vorteilhafte Weiterbildungen sind Gegenstand der anhängigen Ansprüche.

Das erfindungsgemässe Verfahren weist folgende Schritte auf:
(a) Auffüllen der Rohrleitung mit einem fluiden Dichtmittel mit Hilfe getrockneter und gekühlter Druckluft;
(b) Halten des Drucks in der Rohrleitung;
(c) Entfernen des Dichtmittels aus der Rohrleitung mit Hilfe getrockneter und gekühlter, über einen Kompressor mit einer Strömungsgeschwindigkeit von mindestens 40 m/s durch die Rohrleitung geförderten Druckluft;
(d) Trocknen der Rohrleitung mit Hilfe trockener, erwärmter, über den Kompressor geförderten Druckluft;
(e) Abkühlen der Rohrleitung mit Hilfe gekühlter Druckluft.

Der besondere Vorteil des erfindungsgemässen Verfahrens liegt in dem pneumatischen Entfernen des Dichtmittels aus der Rohrleitung und dem pneumatischen Trocknen der Rohrleitung über von einem Kompressor erzeugte Druckluft, welche mit relativ hoher Geschwindigkeit durch die Rohrleitung strömt. Dadurch ist das erfindungsgemässe Verfahren bei geringem Zeitaufwand durchführbar. Die Zeit zum Durchführen des erfindungsgemässen Verfahrens an einem bestimmten Objekt konnte damit etwa halbiert werden. Ergänzend wird darauf hingewiesen, dass zum Entfernen des Dichtmittels aus der Rohrleitung keinerlei Molch erforderlich ist. Das erfindungsgemässe Verfahren ist damit besonders einfach und zeitsparend und daher besonders wirtschaftlich durchführbar.

Vorteilhafterweise wird die Rohrleitung vor dem Abdichten gereinigt, vorzugsweise bei einer Temperatur von 5°C kalt ausgeblasen. Dieser Vorbehandlungsschritt ermöglicht, Ablagerungen wie Schmutz oder Dreck aus der Rohrleitung zu entfernen, bevor das fluide Dichtmittel eingeleitet wird. Dieser Schritt trägt mit dazu bei, dass das Dichtmittel in der Rohrleitung so wenig wie möglich verschmutzt, so dass dieses ohne weiteres mehrfach wiederverwertet werden kann.

Gemäss einer anderen Weiterbildung der Erfindung weist die Druckluft im Schritt (a) vorzugsweise eine Temperatur von 5°C, eine relative Luftfeuchtigkeit von 75 % sowie einen Druck von 5 bar auf. Durch eine derartige Behandlung der Luft ist sichergestellt, dass sich in der Rohrleitung kein Kondenswasser bildet. Vorteilhaft ist dabei ferner, dass mit dem erfindungsgemässen Verfahren kleinere, leichtere Behälter für die Bereitstellung des Dichtmittels verwendet werden können. Dazu waren früher dickwandige, schwere Aluminium-Behälter erforderlich, welche zwar einem hohen Druck standhielten, allerdings nur mit Mühe transportiert werden konnten. Erfindungsgemäss sind daher keine speziellen Druckbehälter mehr erforderlich.

Gemäss einer anderen Weiterbildung der Erfindung beträgt der Druck im Schritt (b) vorzugsweise 5 bar und erfolgt das Halten des Drucks in der Rohrleitung über einen Zeitraum von mindestens 30 Minuten. Damit ist sichergestellt, dass das Dichtmittel in die undichten Stellen der Rohrleitung gedrückt wird und diese damit verschliessen kann.

Gemäss einer vorteilhaften Weiterbildung der Erfindung weist die Druckluft im Schritt (c) vorzugsweise eine Temperatur von 5 °C und eine relative Luftfeuchtigkeit von 75 % auf, wobei vorzugsweise die Druckluft nach dem Abkühlen auf 0°C kompressorseitig auf 5°C erwärmt wird. Dabei lässt sich die Erwärmung der Druckluft von 0°C auf 5°C besonders einfach durch die Abstrahlwärme des Kompressor-Motors herbeiführen. Eine gesonderte Heizeinrichtung ist für diese Erwärmung also nicht erforderlich.

Vorteilhafterweise weist die Druckluft im Schritt (d) vorzugsweise eine Temperatur von 70°C und eine relative Luftfeuchtigkeit von 2,5 % auf. Durch die Erwärmung der Druckluft von 5°C auf 70°C verringert sich deren relative Luftfeuchtigkeit beträchtlich, so dass ein Trocknen der frei geförderten Rohrleitung überaus schnell bewerkstelligt werden kann. Dadurch kann im Vergleich zu bekannten Verfahren viel Zeit eingespart werden, was mit zum wirtschaftlichen Durchführen des erfindungsgemässen Verfahrens beiträgt.

Gemäss einer anderen Weiterbildung der Erfindung beträgt die Temperatur der Druckluft im Schritt (e) vorzugsweise 5°C, wobei auch in diesem Fall das Abkühlen der Druckluft und damit der Rohrleitung besonders wirtschaftlich mit Hilfe des Kompressors erfolgen kann. Es ist klar, dass die von einem Kompressor geförderte Luftmenge deutlich oberhalb derjenigen Luftmenge liegt, welche mit Hilfe eines Gebläses oder eines Ventilators gefördert werden kann.

Gemäss einer besonders bevorzugten Ausführungsform der Erfindung wird das Dichtmittel zum Abdichten der Rohrleitung aus Behältern in die Rohrleitung gefördert und anschliessend wieder in diese Behälter eingefüllt. Daher dienen die Behälter einerseits dem Transport des Dichtmittels zur Rohrleitung und dem Abtransport des Dichtmittels weg von der Rohrleitung. Wie zuvor erwähnt, ist es möglich, das Dichtmittel mehrfach zu verwenden. Nach der Abdichtung der Rohrleitung werden die Behälter also wieder mit dem überschüssigen, d.h. für die Abdichtung nicht benötigten Dichtmittel aufgefüllt. Die Behälter sind beispielsweise Eimer, Kübel oder Kessel. Es ist klar, dass mit zunehmendem Rohrdurchmesser auch ein grösseres Dichtmittel-Volumen benötigt wird, so dass entsprechend mehr Behälter an Dichtmittel zum Einleiten desselben in die Rohrleitung zur Verfügung gestellt bzw. vorhanden sein müssen.

Vorteilhafterweise beträgt die Strömungsgeschwindigkeit der Druckluft in der Rohrleitung beim Entfernen des Dichtmittels aus der Rohrleitung (Schritt (c)) vorzugsweise 50 m/s. Bei einer derartigen Strömungsgeschwindigkeit lässt sich das Dichtmittel besonders schnell aus der Rohrleitung entfernen oder lässt sich die Rohrleitung besonders zeitsparend trocknen, so dass, wie zuvor erwähnt, das erfindungsgemässe Verfahren äusserst zeitsparend und damit wirtschaftlich durchführbar ist.

Gemäss einer anderen Weiterbildung der Erfindung ist der Kompressor vorzugsweise ein Schraubenkompressor, welcher Druckluft mit einem Volumenstrom von 450 m³/h bei 6 bar fördern kann. Daraus folgt, dass ein solcher Kompressor letztlich einen sogenannten "Lufthammer" durch die Rohrleitung pressen kann, mit dem sich gerade die vorerwähnten Vorteile hinsichtlich der Wirtschaftlichkeit des erfindungsgemässen Verfahrens erzielen lassen.

Gemäss einer anderen Weiterbildung der Erfindung werden Installationen, wie Gas verbrauchende Geräte oder Gaszähler, vor dem Abdichten der Rohrleitung demontiert und vorzugsweise durch Ventile oder Hähne ersetzt und erfolgt nach beendeter Abdichtung der Rohrleitung ein Rückbau der betreffenden Installationen. Diese Vor- bzw. Nacharbeiten lassen sich ebenfalls schnell bewerkstelligen, so dass mit dem erfindungsgemässen Verfahren ein äusserst kostengünstiges Abdichten von Rohrleitungen, insbesondere von Gas-Rohrleitungen, möglich ist.

Ein Ausführungsbeispiel des Erfindungsgegenstandes wird nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Vorderansicht einer Vorrichtung zum Durchführen eines Verfahrens zum Abdichten einer Rohrleitung gemäss einem ersten Schritt;
- Fig. 2: eine schematische Vorderansicht der Vorrichtung zum Durchführen des Verfahrens zum Abdichten einer Rohrleitung gemäss einem anderen Schritt; und
- Fig. 3: eine schematische Vorderansicht der Vorrichtung zum Durchführen des Verfahrens zum Abdichten der Rohrleitung gemäss einem weiteren Schritt.

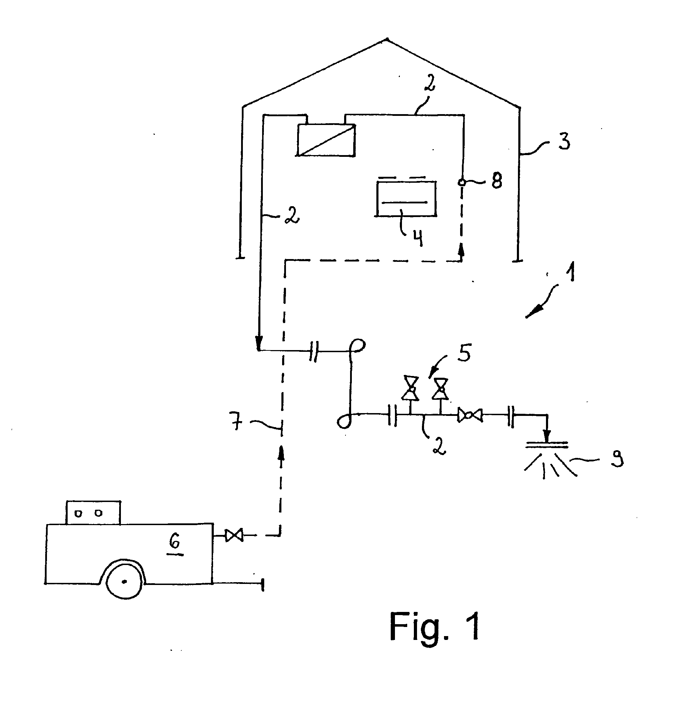

In den Fig. 1 bis 3 ist eine Vorrichtung 1 zum Durchführen eines Verfahrens zum Abdichten einer aus mehreren Teilstücken (nicht näher gezeigt) zusammengesetzten Rohrleitung 2, insbesondere einer Gas-Rohrleitung, in unterschiedlichen Verfahrenszuständen schematisch in einer Vorderansicht dargestellt. Die Vorrichtung 1 ist stark vereinfacht gezeigt.

In einem Haus 3 befindet sich ein Gas verbrauchendes Gerät, wie ein Herd 4, welcher an die Rohrleitung 2 angeschlossen ist. Mit der Rohrleitung 2 sind mehrere Ventile 5 verbunden, die in den Fig. 1 bis 3 vereinfacht und lediglich unterhalb des Hauses dargestellt sind. Es ist klar, dass auch der Herd über ein Ventil oder einen Hahn mit der Rohrleitung 2 verbunden ist (nicht näher gezeigt).

Ferner hat die Vorrichtung 1 einen Kompressor 6 zum Erzeugen von Druckluft. Der Kompressor 6 ist mit der Rohrleitung 2 verbindbar, wie nachfolgend noch näher erläutert wird.

Das erfindungsgemässe Verfahren weist folgende Schritte auf:
(a) Auffüllen der Rohrleitung 2 mit einem fluiden Dichtmittel mit Hilfe getrockneter und gekühlter Druckluft;
(b) Halten des Drucks in der Rohrleitung 2;
(c) Entfernen des Dichtmittels aus der Rohrleitung 2 mit Hilfe getrockneter und gekühlter, über den Kompressor 6 mit einer Strömungsgeschwindigkeit von mindestens 40 m/s durch die Rohrleitung 2 geförderten Druckluft;
(d) Trocknen der Rohrleitung 2 mit Hilfe trockener, erwärmter, über den Kompressor 6 geförderten Druckluft;
(e) Abkühlen der Rohrleitung 2 mit Hilfe gekühlter Druckluft.

Gemäss einer bevorzugten Ausführungsform der Erfindung wird die Rohrleitung 2 vor dem Abdichten gereinigt, vorzugsweise bei einer Temperatur von 5°C kalt ausgeblasen. Dieser Zustand ist in Fig. 1 schematisch gezeigt. Vorzugsweise werden Installationen, wie Gas verbrauchende Geräte oder Gaszähler, so auch wie der Herd 4, wie in Fig. 1 gezeigt, vor dem Abdichten der Rohrleitung 2 demontiert und vorzugsweise durch Ventile oder Hähne ersetzt (nicht näher gezeigt). Es ist klar, dass nach beendeter Abdichtung der Rohrleitung ein Rückbau der betreffenden Installationen erfolgt.

Zum Reinigen der Rohrleitung, d.h. zum kalten Ausblasen derselben, ist der Kompressor 6 über eine gestrichelt dargestellte Druckluftleitung 7 mit einem Anschlusspunkt 8 der Rohrleitung 2 verbunden. Gemäss Fig. 1 befindet sich der Anschlusspunkt 8 beispielsweise nahe dem Herd 4. Mit Hilfe des Kompressors 6 wird dann Druckluft über die Druckluftleitung 7 durch die Rohrleitung 2 gefördert. Verschmutzungen werden so aus der Rohrleitung ausgeblasen, wie dies an der Stelle 9 angedeutet ist. Nach diesem Schritt befindet sich die Rohrleitung 2 im gereinigten, kalten Zustand.

Es ist klar, dass beim Ausblasen ein Teil der in Fig. 1 mit der Rohrleitung 2 verbundenen Ventile 5, nämlich die oberhalb der Rohrleitung 2 gezeigten Ventile geschlossen und das in der Rohrleitung 2 sitzende Ventil geöffnet ist. Es ist ferner klar, dass die Verschmutzungen an der Stelle 9 auch beispielsweise in einem Behälter (nicht gezeigt) aufgefangen werden können.

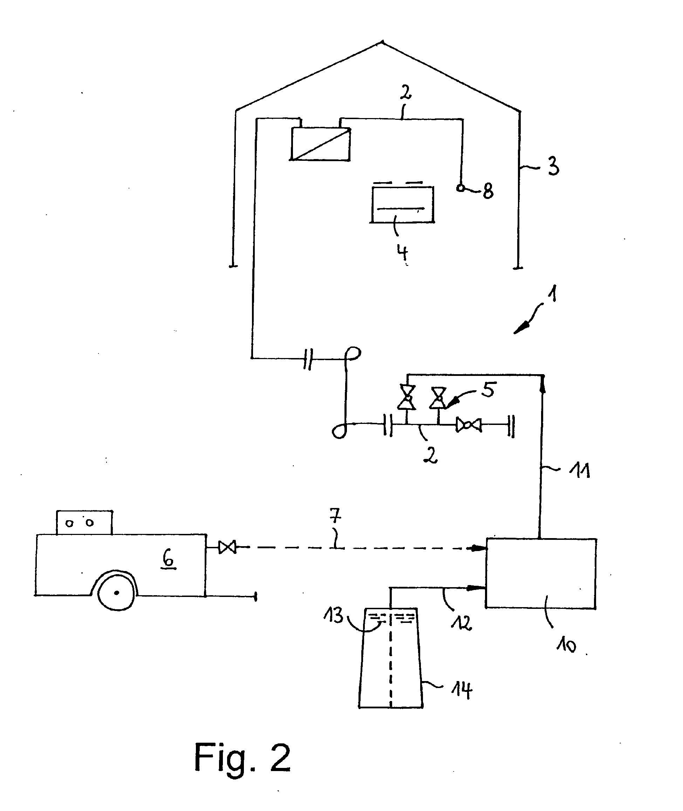

Der nächste Verfahrensschritt ist in Fig. 2 schematisch dargestellt. Hier ist der Kompressor 6 über die Druckluftleitung 7 mit einer Pumpe 10, insbesondere einer Membranpumpe, verbunden. Die Pumpe 10 ist über eine Leitung 11 und eines der Ventile 5 mit der Rohrleitung 2 und über ein nicht näher gezeigtes Ventil über eine weitere Leitung 12 mit einem ein fluides Dichtmittel 13 aufweisenden Behälter 14 verbunden.

Sodann wird die Rohrleitung 2 mit dem fluiden Dichtmittel 13 mit Hilfe getrockneter und gekühlter Druckluft aufgefüllt. Die Druckluft weist hier vorzugsweise eine Temperatur von 5°C, eine relative Luftfeuchtigkeit von 75 % sowie einen Druck von 5 bar auf. Das Erzeugen der getrockneten und gekühlten Druckluft kann mit Hilfe eines nicht näher gezeigten Luftkühlers und eines nicht näher gezeigten Kältekühlers erfolgen, welche in den Kompressor integriert sein können. Ferner kann der Kompressor einen Tropfenabscheider, insbesondere einen Zyklonabscheider, aufweisen.

Das Dichtmittel 13 ist vorzugsweise eine Polymersuspension, beispielsweise eine wässrige Kunststoffdispersion. Solche Dispersionen sind üblicherweise auf Basis von teilweise hydrolysiertem Polyvinylalkohol, Copolymeren aus Vinylacetat und Acrylsäureester oder Copolymeren aus Vinylacetat, Acrylsäureester und Ethylen hergestellt.

Sobald die Rohrleitung 2 mit dem Dichtmittel 13 aufgefüllt ist, wird im Schritt (b) der Druck in der Rohrleitung 2 auf dem Auffülldruck, nämlich vorzugsweise auf 5 oder 6 bar, gehalten. Das Halten des Drucks in der Rohrleitung erfolgt über einen Zeitraum von mindestens 30 Minuten.

Anschliessend wird das Dichtmittel aus der Rohrleitung 2 entfernt, wie dies im Schritt (c) angegeben ist. Hier weist die Druckluft vorzugsweise eine Temperatur von 5°C und eine relative Luftfeuchtigkeit von 75 % auf, wobei vorzugsweise die Druckluft nach dem Abkühlen auf 0°C kompressorseitig auf 5°C erwärmt wird.

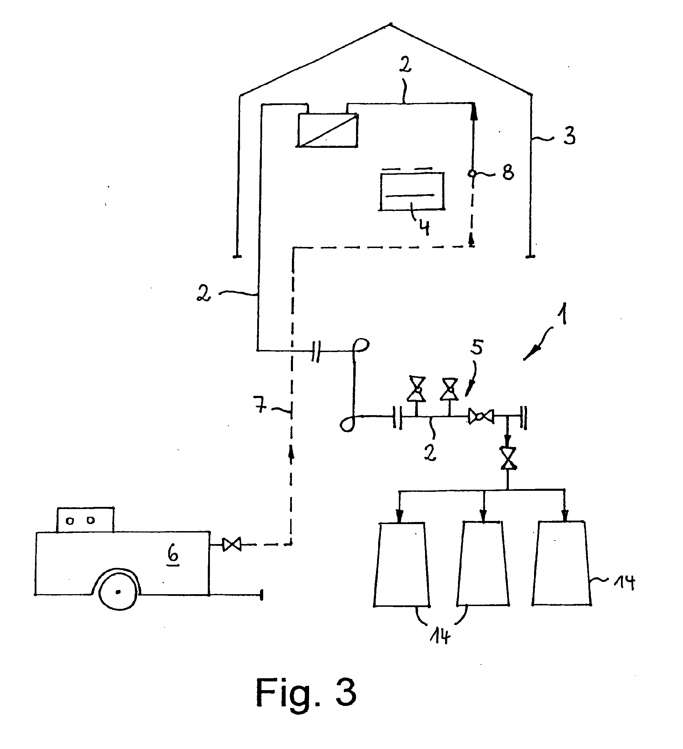

Der Schritt (c) ist in Fig. 3 schematisch gezeigt. Dazu ist der Kompressor 6 über die Druckluftleitung 7 wieder mit dem Anschlusspunkt 8 verbunden und drückt das in der Rohrleitung 2 befindliche Dichtmittel durch eines der in der Rohrleitung 2 sitzenden Ventile 5 zurück in die Behälter 14, wobei dieses Wiedereinfüllen des Dichtmittels in die Behälter 14 derart erfolgen kann, dass die Behälter 14, von denen in Fig. 3 lediglich drei schematisch angedeutet sind, nacheinander mit dem Dichtmittel aus der Rohrleitung befüllt werden. Sobald einer der Behälter auf ein bestimmtes Niveau angefüllt ist, wird der nächste Behälter mit dem Dichtmittel befüllt. Das Befüllen der Behälter kann auch derart geschaltet sein, dass mehrere Behälter gleichzeitig befüllt werden und dass beim Erreichen eines bestimmten Füllstandsniveaus automatisch einer der nächsten Behälter oder auch wieder mehrere Behälter gleichzeitig mit weiterem Dichtmittel aufgefüllt werden. Anschliessend werden die wieder befüllten Behälter 14 von der Rohrleitung 2 getrennt, so dass nun Schritt (d) durchgeführt werden kann, bei dem die Rohrleitung 2 mit erwärmter Druckluft getrocknet wird. Bei diesem Schritt weist die Druckluft vorzugsweise eine Temperatur von 70°C und eine relative Luftfeuchtigkeit von 2,5 % auf. Die Druckluftleitung 7 ist beispielsweise auch im Schritt (d) wie im Schritt (c) mit dem Anschlusspunkt 8 verbunden. Das Erwärmen der Druckluft kann über eine Heizeinrichtung erfolgen, welche ebenfalls in den Kompressor 6 integriert sein kann (nicht näher gezeigt).

Nachfolgend wird Schritt (e) durchgeführt, bei dem die Rohrleitung mit Hilfe gekühlter Druckluft abgekühlt wird. Hier beträgt die Temperatur der Druckluft vorzugsweise 5°C.

Gemäss einer besonders bevorzugten Ausführungsform wird das Dichtmittel zum Abdichten der Rohrleitung aus den Behältern 14 in die Rohrleitung 2 gefördert (siehe Schritt (a)) und im Schritt (c) wieder in diese Behälter 14 eingefüllt. Damit können sowohl die Behälter als auch das Dichtmittel erneut verwendet werden.

Gemäss einer besonders bevorzugten Ausführungsform der Erfindung beträgt die Strömungsgeschwindigkeit der Druckluft in der Rohrleitung 2 beim Entfernen des Dichtmittels aus der Rohrleitung (Schritt (c)) vorzugsweise 50 m/s. Der Kompressor ist vorzugsweise ein Schraubenkompressor und kann Druckluft mit einem Volumenstrom von etwa 450 m³/h bei 6 bar fördern.

Wie zuvor angedeutet, können die Behälter mit speziellen Deckeln versehen sein, bei denen jeweils, wie in Fig. 3 gezeigt, ein Leitungsanschluss vorhanden und an der Innenseite ein nicht näher gezeigter Schwimmer zum Bestimmen der Füllstandshöhe angebracht ist. Die Zufuhr weiteren Dichtmittels wird unterbunden, wenn der jeweilige Behälter gefüllt ist, indem der Schwimmer ein Ventil betätigt, das die weitere Zufuhr von Dichtmittel verhindert. Weiter abzulassendes Dichtmittel wird dann von einem anderen, noch leeren Behälter aufgenommen.

Bei dem erfindungsgemässen Verfahren können Schnellanschlüsse mit Soannzangen für Innen- und Aussengewinde verwendet werden

Derartige Anschlüsse arbeiten mit einer hohen Zuverlässigkeit und Sicherheit. Die Kühlung der Druckluft lässt sich auch über eine einfache Leitungswasserkühlung oder eine Frischwasserkühlung erreichen.

Mit Hilfe einer abschliessenden Druckprüfung nach der Behandlung lässt sich die Dichtigkeit der neu abgedichteten Rohrleitung belegen. Mit Hilfe des erfindungsgemässen Verfahrens ist es möglich, nur die Verbindungen mehrerer Teilstücke der Rohrleitung zu sanieren bzw. abzudichten.

Damit ist ein Verfahren geschaffen, mit dessen Hilfe Rohrleitungen, insbesondere Gas-Rohrleitungen, schnell und effizient, das heisst wirtschaftlich, abgedichtet werden können.

## Patentansprüche

1. Verfahren zum Abdichten einer aus mehreren Teilstücken zusammengesetzten Rohrleitung, insbesondere einer Gas-Rohrleitung, mit folgenden Schritten:
(a) Auffüllen der Rohrleitung mit einem fluiden Dichtmittel mit Hilfe getrockneter und gekühlter Druckluft;
(b) Drücken des Dichtmittels in die undichten Stellen der Rohrleitung durch Halten des Drucks in der Rohrleitung;
(c) Entfernen des überschüssigen, für die Abdichtung der undichten Stellen der Rohrleitung nicht benötigten Dichtmittels aus der Rohrleitung mit Hilfe getrockneter und gekühlter, über einen Kompressor mit einer Strömungsgeschwindigkeit von mindestens 40 m/s durch die Rohrleitung geförderten Druckluft;
(d) Trocknen der Rohrleitung mit Hilfe trockener, erwärmter, über den Kompressor geförderten Druckluft;
(e) Abkühlen der Rohrleitung mit Hilfe gekühlter Druckluft.

2. Verfahren nach Anspruch 1, **dadurch gekennzeichnet, dass** die Rohrleitung vor dem Abdichten gereinigt, vorzugsweise bei einer Temperatur von 5°C kalt ausgeblasen wird.

3. Verfahren nach Anspruch 1 oder 2, **dadurch gekennzeichnet, dass** die Druckluft im Schritt (a) vorzugsweise eine Temperatur von 5°C, eine relative Luftfeuchtigkeit von 75 % sowie einen Druck von 5 bar aufweist.

4. Verfahren nach einem der vorhergehenden Ansprüche, **dadurch gekennzeichnet, dass** der Druck im Schritt (b) vorzugsweise 5 bar beträgt und das Halten des Drucks in der Rohrleitung über einen Zeitraum von mindestens 30 Minuten erfolgt.

5. Verfahren nach einem der vorhergehenden Ansprüche, **dadurch gekennzeichnet, dass** die Druckluft im Schritt (c) vorzugsweise eine Temperatur von 5°C und eine relative Luftfeuchtigkeit von 75 % aufweist, wobei vorzugsweise die Druckluft nach dem Abkühlen auf 0°C kompressorseitig auf 5°C erwärmt wird.

6. Verfahren nach einem der vorhergehenden Ansprüche, **dadurch gekennzeichnet, dass** die Druckluft im Schritt (d) vorzugsweise eine Temperatur von 70°C und eine relative Luftfeuchtigkeit von 2,5 % aufweist.

7. Verfahren nach einem der vorhergehenden Ansprüche, **dadurch gekennzeichnet, dass** die Temperatur der Druckluft im Schritt (e) vorzugsweise 5°C beträgt.

8. Verfahren nach einem der vorhergehenden Ansprüche, **dadurch gekennzeichnet, dass** das Dichtmittel zum Abdichten der Rohrleitung aus Behältern in die Rohrleitung gefördert und anschließend wieder in diese Behälter eingefüllt wird.

9. Verfahren nach einem der vorhergehenden Ansprüche, **dadurch gekennzeichnet, dass** die Strömungsgeschwindigkeit der Druckluft in der Rohrleitung vorzugsweise beim Entfernen des Dichtmittels aus der Rohrleitung (Schritt (c)) 50 m/s beträgt.

10. Verfahren nach einem der vorhergehenden Ansprüche, **dadurch gekennzeichnet, dass** der Kompressor vorzugsweise ein Schraubenkompressor ist, welcher Druckluft mit einem Volumenstrom von 450 m³/h bei 6 bar fördern kann.

11. Verfahren nach einem der vorhergehenden Ansprüche, **dadurch gekennzeichnet, dass** Installationen, wie Gas verbrauchende Geräte oder Gaszähler, vor dem Abdichten der Rohrleitung demontiert und vorzugsweise durch Ventile oder Hähne ersetzt werden und nach beendeter Abdichtung der Rohrleitung ein Rückbau der betreffenden Installation erfolgt.

## Claims

1. Method for sealing a pipe conduit assembled from a plurality of sections, especially a gas pipe conduit, with the following steps:
(a) filling up the pipe conduit with a fluid sealant using dried and cooled compressed air;
(b) pressing of the sealant into the leaking areas of the pipe conduit by maintaining the pressure in the pipe conduit;
(c) removing the excess sealant not needed for the sealing of the leaking areas of the pipe conduit from the pipe conduit using dried and cooled compressed air conveyed through the pipe conduit by means of a compressor with a flow velocity of at least 40 m/s;
(d) drying the pipe conduit using dry, heated compressed air conveyed by means of the compressor;
(e) cooling of the pipe conduit using cooled compressed air.

2. Method according to Claim 1, **characterized in that** the pipe conduit is cleaned prior to the sealing, preferably blown clear while cold at a temperature of 5°C.

3. Method according to Claim 1 or 2, **characterized in that** the compressed air in step (a) preferably has a temperature of 5°C, a relative humidity of 75 % and a pressure of 5 bar.

4. Method according to one of the preceding Claims, **characterized in that** the pressure in step (b) is preferably 5 bar and the pressure in the pipe conduit is maintained for a period of at least 30 minutes.

5. Method according to one of the preceding Claims, **characterized in that** the compressed air in step (c) preferably has a temperature of 5°C and a relative humidity of 75 %, where preferably the compressed air following the cooling to 0°C is heated at the compressor to 5°C.

6. Method according to one of the preceding Claims, **characterized in that** the compressed air in step (d) preferably has a temperature of 70°C and a relative humidity of 2,5 %.

7. Method according to one of the preceding Claims, **characterized in that** the temperature of the compressed air in step (e) preferably is 5°C.

8. Method according to one of the preceding Claims, **characterized in that** the sealant for sealing the pipe conduit is conveyed from containers into the pipe conduit and then again refilled in these containers.

9. Method according to one of the preceding Claims, **characterized in that** the flow velocity of the compressed air in the pipe conduit during the removal of the sealant from the pipe conduit (step (c)) preferably is 50 m/s.

10. Method according to one of the preceding Claims, **characterized in that** the compressor is preferably a screw-type compressor, which can pump compressed air at a volumetric flow rate of 450 m³/h at 6 bar.

11. Method according to one of the preceding Claims, **characterized in that** installations, such as devices using gas or gas meters, are dismantled before the sealing of the pipe conduit and preferably replaced by valves or taps and after the sealing of the pipe conduit is finished the installations affected are then reassembled.

## Revendications

1. Procédé pour étanchéifier une conduite composée de plusieurs éléments, en particulier une conduite de gaz, avec les étapes suivantes :
(a) remplissage de la conduite avec un produit d'étanchéité fluide à l'aide d'air comprimé séché et refroidi ;
(b) compression du produit d'étanchéité dans les fuites de la conduite en maintenant la pression dans la conduite :
(c) élimination hors de la conduite du produit d'étanchéité excédentaire, non nécessaire pour le colmatage des fuites de la conduite, à l'aide d'air comprimé séché et refroidi envoyé à travers la conduite par un compresseur à une vitesse d'écoulement d'au moins 40 m/s ;
(d) séchage de la conduite à l'aide d'air comprimé séché et chauffé envoyé par le compresseur ;
(e) refroidissement de la conduite à l'aide d'air comprimé refroidi.

2. Procédé selon la revendication 1, **caractérisé en ce qu'**avant le calfeutrage, la conduite est nettoyée, de préférence elle est purgée à froid en soufflant de l'air à une température de 5 °C.

3. Procédé selon la revendication 1 ou 2, **caractérisé en ce que** l'air comprimé à l'étape (a) a de préférence une température de 5 °C, une humidité relative de 75 % et une pression de 5 bar.

4. Procédé selon l'une des revendications précédentes, **caractérisé en ce que** la pression à l'étape (b) s'élève de préférence de 5 bar et le maintien de la pression dans la conduite se déroule sur une période d'au moins 30 minutes.

5. Procédé selon l'une des revendications précédentes, **caractérisé en ce que** l'air comprimé à l'étape (c) a de préférence une température de 5 °C et une humidité relative de 75 %, l'air comprimé après un refroidissement à 0 °C étant de préférence chauffé par le compresseur à 5 °C.

6. Procédé selon l'une des revendications précédentes, **caractérisé en ce que** l'air comprimé à l'étape (d) a de préférence une température de 70 °C et une humidité relative de 2,5 %.

7. Procédé selon l'une des revendications précédentes, **caractérisé en ce que** la température de l'air comprimé à l'étape (e) s'élève de préférence de 5 °C.

8. Procédé selon l'une des revendications précédentes, **caractérisé en ce que** le produit d'étanchéité pour colmater la conduite est introduit dans la conduite depuis des récipients et est ensuite reversé dans ces récipients.

9. Procédé selon l'une des revendications précédentes, **caractérisé en ce que** la vitesse d'écoulement de l'air comprimé dans la conduite s'élève de préférence à 50 m/s lors de l'élimination du produit d'étanchéité hors de la conduite (étape (c)).

10. Procédé selon l'une des revendications précédentes, **caractérisé en ce que** le compresseur est de préférence un compresseur à vis qui peut envoyer de l'air comprimé avec un débit volumique de 450 m³/h sous une pression de 6 bar.

11. Procédé selon l'une des revendications précédentes, **caractérisé en ce que** les installations, telles que les équipements consommant du gaz ou les compteurs de gaz, sont démontées avant le colmatage de la conduite et sont de préférence remplacées par des vannes ou des robinets et un remontage de l'installation concernée est réalisé après l'achèvement du colmatage de la conduite.
